Europäisches Patentamt

European Patent Office

Office européen des brevets

(11) Veröffentlichungsnummer: **0 370 361**
**A2**

# (12) EUROPÄISCHE PATENTANMELDUNG

(21) Anmeldenummer: **89121041.1**

(22) Anmeldetag: **14.11.89**

(51) Int. Cl.5: **C08L 23/08, //(C08L23/08, 33:04)**

(30) Priorität: **25.11.88 DE 3839857**

(43) Veröffentlichungstag der Anmeldung:
**30.05.90 Patentblatt 90/22**

(84) Benannte Vertragsstaaten:
**DE FR GB IT**

(71) Anmelder: **BAYER AG**

**D-5090 Leverkusen 1 Bayerwerk(DE)**

(72) Erfinder: **Lindner, Christian, Dr.**
**Im Wasserblech 11**
**D-5000 Köln 91(DE)**
Erfinder: **Piejko, Karl-Erwin, Dr.**
**Unterscheider Weg 7a**
**D-5060 Bergisch Gladbach 2(DE)**
Erfinder: **Billinger, Otto, Dipl.-Ing.**
**Birkenstrasse 13**
**D-5460 Linz(DE)**
Erfinder: **Kubens, Rolf, Dr.**
**Carl-Leverkus-Strasse 1**
**D-5068 Odenthal(DE)**

(54) **Weiche, flexible Polymermischungen aus verseiftem Ethylen-Vinylacetat und Acrylatkautschuken.**

(57) Die Erfindung betrifft weiche, elastische Polymermischungen auf der Basis vernetzter, teilchenförmiger Alkylacrylatkautschuke und verseiften Ethylen-Vinylacetat-Coppolymerisaten. Die Mischungen enthalten kein PVC.

EP 0 370 361 A2

## Weiche, flexible Polymermischungen aus verseiftem Ethylen-Vinylacetat und Acrylatkautschuken

Die Erfindung betrifft weiche, elastische Polymermischungen auf der Basis vernetzter, teilchenförmiger Alkylacrylatkautschuke und verseiften Ethylen-Vinylacetat-Coppolymerisaten. Die Mischungen enthalten kein PVC.

Es ist bekannt, durch Kalandrierung einer Basisfolie und anschließendes Tiefziehen Folien herzustellen, die z. B. für die Innenausstattung von Kraftfahrzeugen verwendet werden. Als Basiskunststoff wird dafür PVC in Abmischung mit diversen Vinylmonomerpolymerisaten und Weichmachern eingesetzt. Nachteile derartiger Folien sind, daß sie bei hohen Temperaturen altern. Weiterhin enthalten sie flüchtige, zur Migration neigende Komponenten, die überwiegend aus dem PVC stammen.

Die Verkleidungsfolien für den KFZ-Bereich können auch durch direkte Sinterung eines Pulvers einer geeigneten Polymermischung (zumeist PVC-haltig) erzeugt werden; dieses Verfahren ("Slush moulding") benötigt Pulver, die bei bestimmten Temperaturen zu einer weichen, lederartigen Folie hoher Festigkeit sintern bzw. zusammenschmelzen.

Die Verwendung von verseiften Ethylen-Vinylacetat-Copolymeren als Beschichtungsmaterialien ist bekannt (z.B. DE-A 1 669 151, DE-A 3 305 353, DE-A 3 447 250). Nach der DE-A 3 305 353 ist auch bekannt, die Eigenschaften solcher verseiften Polymerisate durch Zusatz von löslichen, unvernetzten (Meth)-Acrylatkautschuken zu verbessern. Die (Meth)Acrylatkautschuke können in unvernetzter Form nur in relativ geringen Mengen den verseiften Ethylen-Vinylacetat-Copolymeren zugesetzt werden, sodaß bestimmte Weichheiten nicht eingestellt werden können.

Es wurde nun gefunden, daß Mischungen aus verseiften Ethylen-Vinylacetat-Copolymeren und teilchenförmigen, vernetzten Alkyl-Acrylatkautschuken besonders gut als Verkleidungsmaterialien geeignet sind. Sie werden vorzugsweise durch Sinterverfahren zu Folien verarbeitet. Die erfindungsgemäßen Mischungen haben eine gute Verträglichkeit, sind weich und elastisch und lassen sich in weiten Bereichen variieren. Typische Eigenschaften von verseiften Ethylen-Vinylacetatcopolymeren wie Undurchlässigkeit für bestimmte Gase, elektrische Eigenschaften werden kaum beeinflußt. Die erfindungsgemäßen Mischungen altern kaum.

Gegenstand der Erfindung sind thermoplastische Formmassen aus

a) einem verseiften Ethylen-Vinylacetat-Copolymeren und

b) einem teilchenförmigen, wenigstens teilvernetzten Homo- und Copolymerisat von $C_1$-$C_8$-Alkylacrylaten mit gegebenenfalls bis zu 40 Gew.-% eingebauten Monomeren aus der Reihe Styrol, Acrylnitril, Alkylmethacrylat, Vinylacetat oder Vinylether, wobei das Polymerisat b) mittlere Teilchengrößen ($d_{50}$) von 0,1 - 0,8 $\mu$m und Gelgehalte (als Maß für die Vernetzung, gemessen bei Raumtemperatur) von größer 50 Gew.-% aufweist.

Bevorzugte erfindungsgemäße Formmassen bestehen aus 80 bis 20 Gew.-% a) und 20 bis 80 Gew.-% b), besonders bevorzugt aus 70 bis 40 Gew.-% a) und 30 bis 60 Gew.-% b).

Erfindungsgemäß geeignete Ethylen/Vinylacetat-Copolymerisate a) enthalten vor der Verseifung Ethylen und Vinylacetat in einem Molverhältnis von 2:1 bis 20:1. Sie sind zu 80 bis 100 % verseift (bezogen auf Vinylacetatgehalt).

Vorzugsweise enthalten die Ethylen-Vinylacetat-Copolymerisate vor der Verseifung Ethylen- und Vinylacetat in einem Molverhältnis von 10:1 bis 4:1. Der Verseifungsgrad (Hydrolysegrad) beträgt vorzugsweise 90-100 %.

Die Herstellung der erfindungsgemäß verwendbaren Ethylen/Vinylacetat-Copolymerisate kann nach bekannten Methoden, z.B. durch radikalische Polymerisation bei Drucken von 100 bis 4000 bar und Temperaturen von 30 bis 250°C erfolgen. Ihr durchschnittliches Molekulargewicht (Mw) beträgt 10 000 bis 50 000. Sie besitzen Schmelzindices (gemessen nach DIN 53735 bei 190°C bei einer Belastung von 2,16 kg) von 0,5 bis 200 g/10 Min., vorzugsweise von 5 bis 100 g/10 Min.

Die Verseifung der Ethylen/Vinylacetat-Copolymerisate kann nach bekannten Methoden erfolgen.

Erfindungsgemäß vorzugsweise geeignet sind verseifte Ethylen/Vinylacetat-Copolymerisate, die vor der Verseifung Ethylen und Vinylacetat in einem Molverhältnis von 10:1 bis 4:1 enthalten. Diese verseiften Ethylen/Vinylacetat-Copolymerisate enthalten ca. 13 bis 30 Gew.-% einpolymerisierten Vinylalkohol.

Erfindungsgemäß geeignete Produkte b) sind teilvernetzte, teilchenförmige Kautschukpolymerisate aus

b1) 100 - 60 Gew.-% eines $C_1$-$C_6$-Alkylacrylats, wie Ethyl-, Propyl-, Methyl-, n-Butyl-, Hexylacrylat,

b2) 0 - 40 Gew.-% eines Comonomeren wie Styrol, Acrylnitril, $C_1$-$C_8$-Alkylmethacrylat, wie Methylmethacrylat, Cyclohexylmethacrylat, Vinylacetat und/oder Vinylether und

b3) bis zu 7 Gew.-%, bezogen auf die Summe von b1) und b2), eines polyfunktionellen Vinyl- oder Allylmonomeren zur Vernetzung des Kautschuks, wie z.B. Diol-bis(meth)acrylat, Diamin-bis-acrylamide,

2

Divinylbenzol, Triallyl(iso)cyanurat, Zitronensäuretrisallylester, Acrylsäurevinylester, vorzugsweise Triallylcyanurat.

Die Kautschukpolymerisate weisen mittlere Teilchengrößen ($d_{50}$) von 0,1 - 0,8 $\mu$m, insbesondere 0,1 -0,4 $\mu$m auf und besitzen Gelgehalte größer 50 Gew.-%, insbesondere größer 75 Gew.-%.

Bevorzugte Kautschuke b) enthalten als Komponente b1) Butylacrylat, Hexylacrylat und als Komponente b2) Acrylnitril, Methylmethacrylat.

Die Herstellung der Komponente b) erfolgt in bekannter Weise durch radikalische, wäßrige Emulsionspolymerisation in Gegenwart anionischer, oberflächenaktiver Stoffe im Temperaturbereich von 40 bis 95°C, insbesondere bei 55 bis 80°C.

Das Zumischen der Komponente b) zum verseiften Ethylen-Vinylacetat-Copolymeren kann nach bekannten Methoden (z.B. DE-A 2 611 548), erfolgen. Eine weitere Methode der Zumischung ist beispielsweise die Nachbehandlung eines bereits ausgefällten, zerkleinerten, porösen verseiften Ethylen-Vinyl-acetat-Copolymeren in wäßriger Suspension mit einer Dispersion der Komponente b) in einem mit Wasser nicht mischbaren Lösungsmittel (z.B. Toluol, Petroether, Waschbenzin, Cyclohexan, n-Heptan, Ethylacetat, Chlorkohlenwasserstoffe wie Chloroform, Methylenchlorid, Trichlorethylen usw.)

Bei einem bevorzugten Verfahren zur Herstellung der Mischung wird die Komponente b) bereits in die Verseifungsreaktion zusammen mit dem EVA-Copolymer vorgelegt und anschließend wie üblich aufgearbeitet.

Weiterhin können die erfindungsgemäß eingesetzten verseiften Ethylen-Vinylacetat-Copolymere in einem Kneter oder in einem Extruder mit den Komponenten b) vermischt werden.

Aus dem Granulat der erfindungsgemäßen Formmassen können Beschichtungspulver z.B. durch mahlen der Granulate hergestellt werden. Zusätze, z.B. Füllstoffe, Weichmacher, Farbstoffe und Pigmente können dem Beschichtungspulver in üblichen Mischgeräten in Mengen von 0,5 bis 30 Gew.-% zugesetzt werden.

Geeignete Pigmente sind z.B. anorganische Pigmente wie Titandioxid, Chromoxidgrün, Ultramarin, Cadmiumrot, Cadmiumgelb, Ruß usw. Metalleffekte lassen sich durch Zugabe von z. B. Aluminium, Bronzepulver erzielen. Durch Aufschäumung der Schicht durch organische Treibmittel (z.B. Azodicarbonamid, Diphenylsulfon-3,3'-disulfohydrazid) kann man leichte und stoßfeste Beschichtungen aufbringen.

Die erfindungsgemäßen Formmassen lassen sich in bekannter Weise durch Zusatz polyfunktioneller Additive vernetzten, z.B. durch Polycarbonsäuren, deren Chloriden, Säureanhydriden, durch Polyisocyanate, sowie deren verkappten Formen, durch Polycarbodiimide. Die Vernetzung kann gegebenenfalls während der Folienherstellung durchgeführt werden.

Die Mischungen eignen sich als Beschichtungsmaterialien. Sie haben z.B. hervorragende mechanische Eigenschaften, ein technologisch besonders günstiges Verarbeitungsverhalten, z.B. bei Verwendung in Kalander-, Kaschierverfahren, Pulversinterverfahren.

Die neuen Polymermischungen eignen sich besonders zur Herstellung von geformten Körpern, z.B. zur Herstellung von Verkleidungsfolien mit lederartigem Aussehen. Verkleidungsfolien mit lederartigem Aussehen haben eine große Bedeutung, beispielsweise für die Innenausstattung von Kraftfahrzeugen.

Beispiele

I. Die Komponente a),
hergestellt aus einem Ethylen-Vinylacetat-Copolymer mit einem Gehalt von 34,4 Gew.-% einpolymerisiertem Vinylacetat (Schmelzindex nach DIN 53735 bei 190°C und 2,16 kg Belastung 84 g/10 min) durch Verseifung in methanolischer Na-Methylatlösung, gemäß der DE-A 3 305 353, Beispiel 2.

II. Herstellung der Komponente b)

II.1 In einem Reaktor werden eine Lösung von 2,5 Gew.-Tl. Na-Salz von $C_{14}$-$C_{18}$-Alkylsulfonsäuren und 750 Gew-Tl. Wasser. vorgelegt. Nach Aufheizen auf 70°C gibt man 70 Gew-Tl. der Monomerlösung A) hinzu und startet die Polymerisation durch Zugabe einer Lösung von 3,5 Gew.-Tl. Kaliumperoxodisulfat in 50 Gew-Tl. Wasser Bei 70°C dosiert man den Rest der Lösung A) sowie die Lösung B) gleichmäßig innerhalb von 6 Std. in den Reaktor ein und polymerisiert innerhalb von 4 Std. aus. Es wird ein Latex mit einem Polymerfeststoffgehalt von 37 Gew.-% einer mittleren Teilchengröße ($d_{50}$) von 0,18 $\mu$m und einem Gelgehalt (in Dimethylformamid (DMF)) des isolierten Polymerisats von 98 Gew.-% erhalten.

Lösung A: 1105 Gew.-Tl. n-Butylacrylat

3

7 Gew.-Tl. Triallylcyanurat

474 Gew.-Tl. Acrylnitril

Lösung B: 30 Gew.-Tl. Na-Salz von $C_{14}$-$C_{18}$-Alkylsulfonsäuren

Lösung B: 1790 Gew.-Tl. Wasser

II.2 Es wird ein Copolymerkautschuk aus n-Butylacrylat, Acrylnitril, Triallylcyanurat und tert.-Butylacrylat hergestellt durch Polymerisation von Lösung A nach Vorschrift II:

Lösung A: 1030 Gew.-Tl. n-Butylacrylat

7 Gew.-Tl. Triallylcyanurat

474 Gew.-Tl. Acrylnitril

75 Gew.-Tl. tert.-Butylacrylat

Es wird ein Latex mit einem Polymerfeststoff von 37 Gew.-%, mittleren Teilchengröße ($d_{50}$) von 0,16 μm und einem Gelgehalt (in DMF) des isolierten Polymerisats von 97 Gew.-% erhalten.

II.3 Vergleichspolymerisat

Beispiel II. 1) wird wiederholt, als Lösung A wird eingesetzt:

Lösung A: 1112 Gew.-Tl. n-Butylacrylat

474 Gew.-Tl. Acrylntril

Das hergestellte Polymerisat ist löslich in DMF und unvernetzt.

III. Mehrfunktionelle Isocyanatvernetzer

III.1 dimerisiertes Toluylen-2,4-diisocyanat

III.2 mit ε-Caprolactam blockiertes, cycloaliphatisches Polyisocyanat-Addukt mit einem NCO-Gehalt von 15 % (50 %ige Lösung in Aceton).

IV. Herstellung und Prüfung der Polymermischungen

Die Latices der Komponenten II werden mit 1 Gew.-% (bezogen auf Feststoff) eines phenolischen Stabilisators versetzt und mit wäßriger Magnesiumsulfatlösung koaguliert. Die primär erhaltenen Pulver bzw. Kautschukpartikel werden abfiltriert, gewaschen und bei 60 °C getrocknet.

Die Komponenten I, II und III werden gemäß Tab. 1 auf einem Mischwalzwerk 10 Min. bei 180 °C homogenisiert und bei 190 °C zu Prüfkörpern verpreßt. Die Eigenschaften der Prüfkörper sind in Tab. 2 aufgelistet.

Prüfmethoden:

Zugfestigkeit : DIN 53 455

Dehnung : DIN 53 455

Weiterreißfestigkeit : DIN 53 515

Shore-Härte : DIN 53 505/Typ D

Tab. 1

| Zusammensetzung der Formmassen (in Gew.-Teilen) | | | | | | |
|---|---|---|---|---|---|---|
| Nr. | Komponenten | | | | | |
| | I | II.1 | II.2 | II.3 | III.1 | III.2 |
| 1 erfindungsgemäß | 100 | 50 | - | - | 0,5 | 10 |
| 2 erfindungsgemäß | 75 | 75 | - | - | 0,5 | 10 |
| 3 erfindungsgemäß | 65,5 | 65 | - | - | 0,2 | 19,5 |
| 4 erfindungsgemäß | 65,5 | - | 65 | - | 0,2 | 19,5 |
| 5 (Vergleich) | 75 | - | - | 75 | 0,5 | 10 |
| 6 (Vergleich) | 130 | - | - | - | 1,2 | 19,5 |

Tabelle 2

| Eigenschaften der Mischungen der Tabelle 1 | | | | |
|---|---|---|---|---|
| Versuchs-Nr. | Zugfestigkeit [MPa] | Dehnung [%] | Weiterreißfestigkeit [N/mm] | Shore-Härte [15"] |
| 1 | 11 | 135 | 50 | 37 |
| 2 | 9 | 160 | 35 | 29 |
| 3 | 11 | 170 | 42 | 27 |
| 4 | 11 | 165 | 40 | 28 |
| 5* [1] | | | | |
| 6*) | 14 | 150 | 60 | 42 |

*) Vergleichsmischungen
[1] Mischung ergibt ein rauhes, inhomogenes Walzfell mit Strukturen; es wurden dehalb keine Prüfplatten hergestellt.

**Ansprüche**

1. Flexible thermoplastische Formmassen aus
   a) einem verseiften Ethylen-Vinylacetat-Copolymer und
   b) einem teilchenförmigen, wenigstens teilvernetztem Homo- oder Copolymerisat von $C_1$-$C_8$-Alkylacrylat mit gegebenenfalls bis zu 40 Gew.-% eingebauten Monomeren aus der Reihe Styrol, Acrylnitril, Alkylmethacrylat, Vinylacetat oder Vinylether, wobei das Polymerisat b) mittlere Teilchengrößen ($d_{50}$) von 0,1 bis 0,8 μm und Gelgehalte (gemessen bei Raumtemperatur) von größer 50 Gew.-% aufweist.
2. Verwendung von Formmassen nach Anspruch 1 zur Herstellung von geformten Körpern.